# EUROPEAN PATENT SPECIFICATION

(11) **EP 1 424 891 B1**
(45) Date of publication and mention of the grant of the patent: **12.01.2011**
(21) Application number: 02765310.4
(22) Date of filing: 02.09.2002
(51) Int. Cl.: A01N 25/26, C05G 5/00

(54) **MULTI-LAYER ADJUVANTS FOR CONTROLLED DELIVERY OF AGRO-MATERIALS INTO PLANT TISSUES**
VIELSCHICHTIGE HILFSMITTEL ZUR KONTROLLIERTEN ABGABE VON AGROMATERIALIEN IN PFLANZENGEWEBE
ADJUVANTS MULTICOUCHES POUR LA LIBERATION CONTROLEE D'AGROMATERIAUX DANS DES TISSUS VEGETAUX

(30) Priority: 03.09.2001 IL 14523601
(43) Date of publication of application: 09.06.2004
(73) Proprietor: Ben Gurion University Of The Negev Research And Development Authority, 84105 Beer Sheva (IL)
(72) Inventor: WIESMAN, Zeev, 85338 Lehavim (IL); MARKUS, Arie, 84308 Beersheva (IL)
(74) Representative: Hubert, Philippe
(86) International application number: PCT/IL2002/000723
(87) International publication number: WO 2003/020028

(56) References cited:
- EP-A- 0 784 040
- WO-A-00/05953
- WO-A-92/06056
- GB-A- 1 299 378
- GB-A- 1 574 938
- US-A- 5 178 795
- US-A- 5 827 540
- LIN K C: "DEVELOPMENT OF SOLID PESTICIDE FORMULATIONS BY FLUIDIZED-BED TECHNOLOGY" PESTICIDE FORMULATIONS - INNOVATIONS AND DEVELOPMENTS. NEW ORLEANS, AUG. 30 - SEPT. 4, 1987, MEETING OF THE AMERICAN CHEMICAL SOCIETY, WASHINGTON, ACS, US, vol. MEETING 194, 1988, pages 251-259, XP002049292

## Description

### Field of the Invention

The present invention relates to compositions for the treatment of plants, which combine agro-materials with adjuvants having a multi-layer structure, said adjuvants allowing a controlled penetration, and particularly a long-lasting penetration, of the agro-materials through the plant's skin, while lowering the application costs and the risk of damaging the plant's tissues.

### Background of the Invention

The term "agro-materials", as employed in this specification and claims, particularly includes any materials chosen from the group consisting of fertilizers, trace elements, plant growth regulators, biostimulants, pesticides, herbicides and insecticides. However, any materials affecting the growth of plants, or serving a desirable purpose in dealing with vegetable crops, are to be considered included in the said term. The term "plant" is used herein to designate any vegetable crop and involves no limitation of the kind of crop treated according to the invention.

The plant's skin (hereinafter "cuticle membrane" or "CM") is the main barrier to the penetration of agro-materials into the plant's tissues. The CM network is made of alkanes, alkenes, fatty acids and fatty alcohols. It contains also an amorphous fraction made of terpenes and other aromatic compounds.

Agro-materials are often applied in aqueous solution or suspension, that is preferably sprayed on the plants to be treated. The penetration of agro-materials into the plant's tissues occurs by diffusion through the CM. The molecular size of the applied agro-material and its electrolytic nature determine its ability to penetrate through the CM. In order to enable an efficient diffusion through the CM, surfactants containing wetting, sticking and spreading agents are usually included in the spraying solution. Surfactants are so selected as to address the cuticle surface properties. There are, for example, several formulations on the market based on organosilicones that are good spreaders, but that, on the other hand, cause an irreversible damage to the plant's tissues.

Environmental humidity, temperature and irradiation in the habitat of the sprayed plant control the rate of water evaporation from the sprayed solution and consequently determine the crystallization time of the applied agro-materials. Crystallization usually occurs between 0.5 and 2 hours subsequent to spraying. After crystallization, any further diffusion of the agro-material into the plant's tissues completely stops. In many cases, particularly under extremely high temperatures, high irradiation and low humidity conditions, fast crystallization occurs, resulting in a severe damage to the plant's tissues. Also, a too fast penetration rate can damage the plant's tissues, particularly when the sprayed solution is highly concentrated. Attempts to use polyethylene glycol to reduce the evaporation rate of the sprayed drops and thus to reduce the damage to the plant's tissues and delay crystallization, have not yielded satisfactory results.

The prior art has attempted to facilitate and control the penetration into plants' tissues, and generally to improve the action of agro-chemicals, by adding to them auxiliary compositions. Any such composition will be called hereinafter "adjuvant". Thickening agents, such as polysaccharides, are included in some prior art adjuvant formulations, used for spray application of fertilizers and pesticides, for the purpose of extending the life span of the sprayed drops: see US 5,389,386, US 6,074,987, US 6,093,682 and EP 0784040. However, the adjuvant formulations disclosed in said patents and in other prior art publications do not provide a significant control of the rate of penetration and particularly do not provide long-lasting penetration of agro-materials, as is desirable to minimize toxicity to the plant and to reduce the number of applications required for a desired biological result.

It is known in the art that non-electrolytic compounds, such as urea, better penetrate through biological membranes, the plant's CM included, than species of a more electrolytic nature, such as mono-potassium phosphate (MKP). In many cases undesired anchoring of the electrolyte species onto the ionized CM occurs and said species do not reach the plant's tissues.

In order to enhance the diffusion through the CM, mediators are required that function by partially saturating the binding sites in the CM and/or modifying its elasticity and plasticity, resulting in enhancing its permeability to ionized agro-materials.

WO 00/05953 of the present inventors discloses liquid adjuvant systems, comprising a wetting agent, a polysaccharide and a plasticizer, and demonstrates the ability to use a cocktail of adjuvants for obtaining better performance in foliar fertilization than that exhibited by other prior art. However, the said adjuvants have two drawbacks. One drawback is the separation from the adjuvant mixture, during shipping or storing, of the polysaccharide, which constitutes a critical ingredient. Thus, the adjuvants disclosed in WO 00/05953, while effective when freshly prepared, lack stability in shipping and storing. The other drawback is that the said adjuvants do not afford complete protection from the atmosphere of both the agro-material and of the polysaccharide, resulting in a diminished biological effectivity of the agro-materials. For example, Fe2+ rapidly oxidizes to Fe3+ and MKP crystallizes shortly after application due to fast evaporation.

It is an object of the present invention to provide compositions of agromaterials and adjuvants, which allow a controlled penetration rate of the agro-materials into the plant's tissues, and particularly allow a long-lasting penetration.

It is another object of the present invention to provide a particulate material combining agro-materials and adjuvants in a structure in which the agromaterials form the nuclei of the particles and the adjuvants form coatings of said nuclei.

It is a further object of the present invention to provide such a particulate material wherein the adjuvants comprise a plurality of components, including solid and semi-solid components.

It is a still further object of the present invention to provide structural combinations of agro-materials and adjuvants, which causes an improved metabolism of the agro-materials when applied to vegetable crops.

It is a still further object of the present invention to provide a process for preparing the composition as described or defined in the description.

Other purposes and advantages of the invention will become apparent as the description proceeds.

### Summary of the Invention

The claims defining the scope of the present invention are hereby incorporated by reference into the summary of the invention.

The present invention provides a novel composition, sometimes called hereinafter "agro-composition", that is a structural combination of agromaterials and adjuvant formulations. Said composition forms a particulate material, wherein an agro-material particle constitutes the nucleus of each composition particle and the adjuvant formulations constitute a coating of the composition particle. Preferably, the adjuvant formulations comprise a plurality of components, and more preferably, said components constitute substantially superimposed coating layers in each particle of the composition. Preferably, the adjuvant formulations comprise a combination of lipophilic and hydrophilic cuticle surface active agents, wetting agents, thickening agents and fatty self-emulsified components. Cuticle surface active agents are sorbed into the CM, following which they enhance the penetration of the agro-material.

In an embodiment of the invention, the agro-composition additionally comprises solid or semi-solid, preferably inert, materials with the same or different adjuvant formulation absorbed therein. These materials which are preferably semi-solid, particularly gel-like, can be applied to the naked or already coated core, creating an adjuvant layer thereon. Such additional layer/s increase the amount of adjuvant in the agro-composition.

The preferred adjuvant formulations include wetting and surface active agents that optimize the spreading and sticking of the composition particles to the plant's CM. They also include thickening agents, such as polysaccharides, that delay crystallization of the agro-chemicals. The adjuvant's components may optionally be sorbed into a solid or semi-solid carrier made of such materials as fumed silica or clay, and the carrier sorbed with the adjuvant may be used to form a coating layer over the core particle. The addition of a solid or semi-solid adjuvant coating layer may contribute to preserving the integrity of the system, rendering it stable during storing and shipping.

Unlike solid adjuvants of prior art, such as described in US 4,874,423, US 6,074,987 and in other publications, there are also included in the solid or semi-solid adjuvants of the present invention lipid components that can either enhance or retard the penetration rate of the agro-material. Determining the penetration rate of the agro-material serves two purposes: to optimize its metabolism in the plant and to reduce the risk of toxic effects. To the best of the inventors' knowledge there have not been disclosed compositions that can exert a long-term effect on the mobilization of agro-materials through the plant's CM.

The following Examples demonstrate some ranges of weight ratios between the different components of the agro-composition.

In a preferred embodiment of the invention, the composition is a particulate material in which each particle has a core of an agro-material, as herein defined, coated by several, superimposed layers consisting of a polysaccharide, a solid fat (having a relatively high melting point), a fatty alcohol and an esterified vegetable oils containing self-emulsifier. The particles may have identical cores, i.e. all being of the same agro-material, or have core of different agro-materials.

The polysaccharide component, due to its hydrophilic nature, sticks to the core and fully covers it. The polysaccharide layer is covered by a solid fat layer, which in turn is covered by a fatty alcohol layer. The top layer is made of a mixture of liquid vegetable oils. The order of layers is determined by the differences in the specific gravity of the lipid components. The said layers are substantially superimposed, by which expression is meant that the layers are not sharply separated, and any two adjacent layers are partially mixed at their interface.

The multi-layer structure of the particles of the composition of the invention affords the following advantages:
a) A full and uniform covering of the core.
b) An improved spreading of the agro-material over the plant's CM.
c) The prevention of caking of the composition particles.
d) The prevention of the oxidation of oxidation-sensitive agro-materials.
e) The control of the penetration rate (and penetration duration) of the agro-material, particularly allowing a long-lasting penetration through the plant's cuticle membrane and internal membranes.
f)_ The adhesion of the sprayed material to the plant's CM, which reduces the amount lost during rainfall, and droplets rebound effect, off the leaf.
g) The reduction of the application costs.
h) The prevention, or at least reducing of any damage to the plant's tissues.

The hydrophilic polysaccharide tends to absorb water produced during transpiration. The top-coated lipid layers inhibit water evaporation, enabling a moderate, long-lasting diffusion of the agro-material into the plant's tissues. The lipid components in the composition of the present invention also plasticize the cuticle membrane by inducing moderate (and reversible) disorder in it, which allows partial absorption of the polysaccharide into the plant's epicuticular wax layer (the main barrier to penetration). The agro-material, due to its strong adhesion to the polysaccharide, is thus afforded a pathway in the CM and can slowly diffuse through it.

The compositions of the present invention allow the loading of high concentrations of agro-materials (up to 10% of salts) onto the plant without harming the tissues. As a result, fewer spray applications are needed to achieve desired biological effects, thereby improving the cost-effectiveness of agricultural spray applications.

Surprisingly, the agro-compositions of the present invention are found to allow exceptionally long penetration duration of agro-nutrients, up to three weeks under common field conditions, without harmfully affecting the plant's foliage. By contrast, prior art compositions, in particular adjuvant formulations, provided only considerably shorter diffusion times, never exceeding 24 hours. Additionally, the compositions of this invention have improved spreading and sticking to the plant's CM surface.

### Detailed Description of the Invention

As stated hereinbefore, the term "agro-materials", as employed in this specification and claims, includes, but is not limited to, any materials chosen from the group consisting of fertilizers, trace elements, plant growth regulators, biostimulants, pesticides, herbicides and insecticides. In a preferred embodiment of the invention, the agro-material may comprise one or more material(s) of the following classes: 1) at least one fertilizer, preferably containing at least one element selected from the group consisting of potassium, nitrogen, phosphorous and mixtures thereof; 2) at least one micro-element, preferably selected from the group consisting of iron, zinc, boron, magnesium, manganese, copper, calcium, molybdenum and mixtures thereof, 3) at least one plant growth regulator, preferably selected from the group consisting of auxin, gibberelline, cytokinine, ethylene, abssicic acid, a growth retardant, jasmonic acid, polyamine, brassinolid, salicylic acid and mixtures thereof.

The agro-material may be also 4) an insecticide, preferably selected from the group consisting of insect growth regulators, organo-phosphorus compounds, carbamides, thiocarbamides and mixtures thereof; 5) an herbicide, preferably selected from a group consisting of bromacil, diuron, glyphosate and mixtures thereof; 6) a biostimulant, preferably selected from the group consisting of humic acid, amino acids, sea weed, algae and mixtures thereof.

The adjuvant formulations, which, combined with one or more of the said agro-materials, form preferred embodiments of the compositions of this invention, may include: a) at least one surface active agent; b) at least one thickening agent; c) at least one high melting point fat; d) at least one fatty alcohol; e) at least one esterified vegetable oil containing a self-emulsifier; f) at least one epoxified triglyceride.

In a second preferred embodiment of the present invention, said solid or semi-solid substrate is a non-agro-material solid or semi solid, such as fumed silica, that functions as a carrier to the adjuvant mixture, which is absorbed therein, wherein a layer or layers of said solid or semi-solid carrier, absorbed with said adjuvant components, can be coated onto the said core of agro-material, or over a core which is already adjuvant-coated. Alternatively, said solid or semi-solid carrier is made of clay. Fumed silica and clay, which are very fine flowable powders and highly porisivic, are particularly suitable carriers, and can acquire gel-like properties when loaded beyond their absorption capacity. Thus, when loading these carriers with the "adjuvant cocktail", that part of the cocktail which is not absorbed, particularly the polysaccharide-oil mixture, remains out of the powder pores and confers gel-like properties.

The compositions of the present invention are preferably used contained in agrochemical formulations, preferably aerosol or spay formulations. Such formulations are prepared by suspending the composition in a suitable solvent, preferably water.

Most preferred are the formulations Nos. 1 to 6 described in the Examples.

In a further aspect, the invention relates to methods of treating plants by applying to the plants, preferably to the foliage, a composition of the invention or a formulation comprising the same. The methods of the invention are intended, but not limited to long-lasting foliar application of macroelements pre-blooming long-lasting foliar application of macro and trace elements, long-lasting foliar application of trace elements, particularly iron or other oxygen-sensitive elements, and improving mechanical harvesting of fruit bearing plants by reducing fruit retention force.

The advantages of applying the compositions or formulations of the invention are demonstrated in the following Examples.

Still further, the invention relates to a process for preparing the compositions of the invention, which comprises:
a) preparing a homogeneous mixture of adjuvant formulation components,
b) preparing a fine crystal powder of the agro-materials,
c) spraying said mixture on said powder while rotating and heating said powder, whereby to coat the particles of said powder,
d) cooling while rotating said coated powder particles, and
e) drying said coated powder particles.

In another embodiment, the invention relates to a process for preparing a composition according to the invention, which comprises:
a) providing at least one agro-material in particulate form and a solid or semi-solid carrier;
b) preparing a homogeneous adjuvant mixture of adjuvant formulation components,
c) spraying said adjuvant mixture over said at least one agro-material,
d) sorbing said adjuvant mixture into said solid or semi-solid carrier,
e) applying the carrier sorbed with said adjuvant mixture obtained in step d) onto the particles obtained in step c),
f) optionally spraying the particles obtained in step e) with said adjuvant mixture,
g) cooling the particles obtained in step e) or step f), and
h) allowing the cooled agro-material obtained in step g) to dry.

In a particular embodiment of this process more than one agro-material in particulate form is employed.

Disclosed and described, it is to be understood that this invention is not limited to the particular examples, process steps, and materials disclosed herein as such process steps and materials may vary somewhat. It is also to be understood that the terminology used herein is used for the purpose of describing particular embodiments only and not intended to be limiting since the scope of the present invention will be limited only by the appended claims.

It must be noted that, as used in this specification and the appended claims, the singular forms"a","an"and"the"include plural referents unless the content clearly dictates otherwise.

Throughout this specification and the claims which follow, unless the context requires otherwise, the word"comprise", and variations such as "comprises"and"comprising", will be understood to imply the inclusion of a stated integer or step or group of integers or steps but not the exclusion of any other integer or step or group of integers or steps.

The following Examples are representative of techniques employed by the inventors in carrying out aspects of the present invention. These techniques are exemplary of preferred embodiments for the practice of the invention.

### Examples

### I - Adjuvant Ingredients

### Oils:

- Vegeol SPOR, a vegetal oil plus emulsifier used as spreader and plasticizer (Aarhus, Denmark).
- Castor oil, spreader and plasticizer.
- Vernonia oil, epoxified triglyceride, plasticizer.

### Fats:

COATEX 21^{R}, stearin solid fat. Used for gum gels coatings (Aarhus,
Denmark).

### Waxes:

- Jojoba - liquid plant wax. Retarding the rate of penetration of materials through the plant's CM.
- Plastinol^{R} - mineral hydrocarbon wax replacer. Used for gum coating and retarding penetration (Loders Croklean, The Netherlands).

### Detergents:

- Triton X-100^{R}, surfactant (Sigma, U.S.A.).
- Tween 20^{R}, surfactant (Sigma, U.S.A.).
- Optima^{R}, surfactant and cuticle plasticizer (Helena, U.S.A.).
- Induce, surfactant and cuticle plasticizer (Helena, U.S.A.).
- Dehydol LT-6^{R}, plasticizer and accelerator of penetration (Henkel, Germany).

### Polysaccharides:

- Derivatized guar gum, sticker and anti-evaporative agent (Economy Polymers, U.S.A.).
- Glucopon HH/EC 600^{R}, plasticizer and penetration accelerator (Henkel, Germany).

### Absorbents:

- Tisoseal^{R}, fumed silica (Airosil 300^{R}, Airosil 380^{R} and Airosil 972^{R}).
- clay (oil dry, U.S.A.).
- calcium silicate.

### Fertilizers:

MKP and phosphoric acid were from Rotem Amfert Negev (Israel).
ENOs was from SQM, Chile

### II - Adjuvant Formulations

**In all of the following formulations (1 to 6) water was used as the solvent (**

**Formulation 1:**

| Wide range | | Preferred range |
|---|---|---|
| MKP-Nutri-Vant | % w/w in spraying formulation | % w/w in spraying formulation |
| MKP | 1-5 | 1 - 3 |
| Vegeol SPO^{R} | 0.01 - 2 | 0.1 - 1 |
| Vernonia oil | " | 0.05 - 0.2 |
| Coatex 21^{R} | " | 0.05 - 0.2 |
| Induce^{R} | " | 0.1 - 0.3 |
| Optima^{R} | " | 0.1 - 0.3 |
| Dehydrol LT-6 | " | 0.1- 0.3 |
| Derivatized guar gum | " | 0.1 - 1 |

**Formulation 2:**

| Wide range | | Preferred range |
|---|---|---|
| MKP-Nutri-Vant II | % w/w in spraying formulation | % w/w in spraying formulation |
| MKP | 1-5 | 1 - 3 |
| Vegeol SPO^{R} | 0.01 - 2 | 0.1-1 |
| Tween 20^{R} | " | 0.1 - 0.3 |
| Coatex 21^{R} | " | 0.05 - 0.2 |
| Jojoba wax | " | 0.05 - 0.2 |
| Induce^{R} | " | 0.1-0.3 |
| Derivatized guar gum | " | 0.1 - 1 |

**Formulation 3:**

| Wide range | | Preferred range |
|---|---|---|
| Nutri-Vant III | % w/w in spraying formulation | % w/w in spraying formulation |
| KNOs | 1-7 | 1-4 |
| MKP | 1-5 | 1- 3 |
| 2,4-Dp | 0.001 - 0.1 | 0.001- 0.01 |
| Vegeol SPO^{R} | 0.01 - 2 | 0.1-1 |
| Tween 20^{R} | " | 0.1- 0.3 |
| Coatex 21^{R} | " | 0.05 - 0.2 |
| Jojoba wax | " | 0.05 - 0.2 |
| Induce | " | 0.1- 0.3 |
| Derivatized guar gum | " | 0.1 - 1 |

2,4 dichlorophenoxy propionic acid (2,4-Dp) was from Sigma, USA.

**Formulation 4:**

| Wide range | | Preferred range |
|---|---|---|
| Olive-Nutri-Vant^{R} | % w/w in spraying formulation | % w/w in spraying formulation |
| Urea | 0.5 - 3 | 0.5-1.5 |
| MKP | 1-5 | 0.1- 3 |
| Boric acid | 0.5 - 4 | 0.5 - 2 |
| Castor oil | 0.01- 2 | 0.1 - 1 |
| Tween 20^{R} | 0.01- 2 | 0.1- 0.3 |
| Plastinol^{R} | 0.01 - 2 | 0.05 - 0.2 |
| Coatex 21^{R} | 0.01- 2 | 0.05 - 0.2 |
| Induce^{R} | 0.01- 2 | 0.1-0.3 |
| Optima | 0.01- 2 | 0.1- 0.3 |
| Derivatized guar gum | 0.01- 2 | 0.1 - 1 |

**Formulation 5:**

| Wide range | | Preferred range |
|---|---|---|
| Ferri-Vant^{R} | % w/w in spraying formulation | % w/w in spraying formulation |
| Fe₂(SO₄)₃ | 0.01-1 | 0.1 - 0.8 |
| Vegeol SPO^{R} | 0.01 - 1 | 0.1- 0.3 |
| Tween 20^{R} | " | 0.01 - 0.1 |
| Jojoba wax | " | 0.01 - 0.1 |
| Plastinol^{R} | " | 0.01 - 0.1 |
| Coatex 21^{R} | " | 0.01- 0.1 |
| Induce^{R} | " | 0.01 - 0.1 |
| Derivatized guar gum | " | 0.1 - 0.3 |
| Tixoseal^{R} | " | 0.01-0.05 |

**Formulation 6:**

| Wide range | | Preferred range |
|---|---|---|
| HarvestVant^{R} | % w/w in spraying formulation | % w/w in spraying formulation |
| MKP | 1- 5 | 1- 3 |
| DKP | 0-3 | 0-2 |
| Ethephon | 0.01-1 | 0.05 - 0.15 |
| Phosphoric acid | 0.01 - 1 | 0.05 - 0.01 |
| Humic acid | 0.01- 0.5 | 0.05 - 0.1 |
| Vegeol SPO^{R} | 0.01 - 1 | 0.1- 0.3 |
| Tween 20^{R} | " | 0.01- 0.1 |
| Jojoba wax | " | 0.01- 0.1 |
| Plastinol^{R} | " | 0.01 - 0.1 |
| Coatex 21^{R} | " | 0.01 - 0.1 |
| Induce^{R} | " | 0.01 - 0.1 |
| Derivatized guar gum | " | 0.1- 0.3 |
| Tixoseal^{R} | " | 0.01- 0.05 |

### III - Composition Preparation Procedures

### Procedure A:

Liquid adjuvant cocktail containing the specific list of oils, fats, waxes, detergents and polysaccharides for each formulation is preheated to 35-45°C and mixed well for about 30 minutes until a homogenous solution is obtained. The cocktail is then poured into a sprayer atop a rotating pan heated to 35-45°C in which a fine crystal powder of the agro-material or a mixture of agro-materials is placed. The cocktail is sprayed on the agro-material crystals during rotation, the heating is replaced with a cool air pan and the mixture is rotated for a further 30 minutes, after which the coated agro-material is dried for several hours.

The above procedure is followed when a ratio in the range of 10:1 to 20:1 w/w between the agro-material crystals and the adjuvant cocktail is required.

### Procedure B:

When a ratio of between 1:2 and 1:5 w/w between the agro-material and the adjuvant cocktail is required (such as in the case of trace elements and more particularly of iron), a different procedure is followed (which will be described, by way of example, with reference to Fe₂(SO₄)₃ as the agro-material, but can be carried out with any other agro-material).

3 kg of Fe₂(SO₄)₃ are initially sprayed with 0.75 kg pre-heated (35-45°C) well-mixed liquid adjuvant cocktail (see Formulation 5, all ingredients but for the Fe₂(SO₄)₃ and the Tixoseal^{R}). In a second step, 0.468 kg of the cocktail absorbed on 0.156 fumed silica (Tixoseal^{R}) are mixed with the initially sprayed Fe₂(SO₄)₃. The Tixoseal^{R} allows to load enough adjuvant cocktail onto the Fe₂(SO₄)₃ crystals to reach a ratio of 3:1 w/w and to avoid separation of the components. Finally, another 0.281 kg of liquid adjuvant cocktail is sprayed on the crystals, already adsorbed with a layer of the adjuvant-sorbed Tixoseal^{R}, to ensure a multi-layer uniform coating. The product is then cooled and permitted to dry.

### Procedure C:

When it is required to separate between various components of the agro-material mixture in the coated formulation to keep its activity and to prevent the release of one compound after long storage as a gas, such as in the case of "HarvestVant™", containing of MKP, DKP, Humic acid and ethylene forming agent - Ethephon - specifically designed for loosening fruit retention force (Ethephon quickly decomposes to ethylene under alkaline and high temperature conditions), a three-envelope coating procedure is operated.

In the initial step Ethephon is sorbed onto fumed silica (Tixoseal) and then pre-heated (35-45 C°). Well mixed liquid adjuvant cocktail (see Formulation 6 ) is sprayed to form the first envelope. A second envelope of the same adjuvant cocktail is formed on the other ingredients of the formulation (MKP, DKP, Phosphoric acid and Humic acid). The two coated batches are mixed together well and another pre-heated well mixed same liquid adjuvant cocktail is sprayed to form the third envelope coating of the final formulation. The product is then cooled and allowed to dry.

### IV - Experimental Results

### Example 1

### Effect of MKP-Nutri-Vant^{R} I on the Percent of Penetration of Phosphorous (³²P) through Citrus Grandis Isolated Cuticles

The experiment was carried out for three weeks in a controlled shaking chamber set at 60% relative humidity and 25°C. The values are calculated from the transformation formula -ln(1-Mₜ/Mₒ). Mt is the accumulation of radioactivity penetrated in each time period tested; Mₒ is the total radioactivity applied to the isolated cuticle, based on Schönherr and Riederer [Schonherr, J. and M. Riederer, Plant Cell Environ. 4:349-354 (1986)]. The values are the means of at least 20 replicates ± S.E.

**Table I**

| **% Penetration of ³²P** | | | | | | | |
|---|---|---|---|---|---|---|---|
| Treatment Hours | 0 | 24 | 48 | 96 | 168 | 336 | 504 |
| (1)MK³²P* alone | 0 | 2.6 ±0.8 | 3.4±1.1 | 5.7±1.4 | 6.3±1.9 | 7.5±1.6 | 7.9±1.9 |
| (2) MK³²P*+ Nutri-Vant I | 0 | 3.7±0.9 | 21.2±1.6 | 36.1±2.2 | 42.0±1.6 | 54.4±1.9 | 67.2±2.4 |

| | | | | | | | |
|---|---|---|---|---|---|---|---|
| * MK³²P: Monopotassium phosphate 1.0 mci, 3%, MBq specific activity, Biotec, Israel, coated with: Vegeol SPO^{R}, Vernonia oil, Coatex 21^{R}, Indu ce^{R}, Optima^{R}, Dehydol LT-6^{R} and derivatized guar gum 0.7%. | | | | | | | |

### Example 2

### Effect of MKP-Nutri-Vant II on the Percent of Penetration of Phosphorous (³²P) into Citrus Grandis Leaves

The experiment was carried out for two weeks in a controlled shaking chamber set at 60% relative humidity and 25°C. All the details are similar to those in the previous table.

**Table II**

| **% penetration of ³²P** | | | | | |
|---|---|---|---|---|---|
| **Treatment Hours** | **0** | **48** | **96** | **168** | **336** |
| (1)MK³²P* alone | 0 | 3.1±0.8 | 4.7±0.6 | 5.5 ±0.6 | 6.4 ±0.4 |
| (2) MK³²P + Silwet L-77* | 0 | 4.4±0.6 | 5.2±0.4 | 6.9±0.5 | 8.5±0.6 |
| (3) MK³²P**+ Nutri- Vant II | 0 | 1.9±1.2 | 5.4± 0.8 | 12.9±0.8 | 18.3±3.4 |

| | | | | | |
|---|---|---|---|---|---|
| • reference formulation (0.2% w/w). ** MKP (3% w/w) coated with: Vegeol SPO^{R}, Tween 20^{R}, Coatex 21^{R}, Jojoba wax, Induce^{R}, derivatized guar gum (0.2% w/w). | | | | | |

### Example 3

### Effect of Ferri-Vant (Multi-layer Adjuvant Coated Fe₂(SO₄)₃ on the Biological Activity of Iron Sprayed on Citrus Lemon Urika Chlorotic Foliage

Changes in leaf color, chlorophyll level, iron content and leaf burns were examined ten days after application. The Ferri-Vant effect was compared with the untreated control, Fe₂(SO₄)₃ sprayed alone and Fe₂(SO₄)₃ treated with the surfactant Silwet^{R} L-77. Ten leaves from five trees sprayed for each treatment were sampled and scored for green color. The scoring was based as follows: 1 - yellow leaves; 2 - light green leaves; 3 - vigorously green leaves. Chlorophyll level was determined spectrophotometrically as reported by Moran [Moran, R., Plant Physiol. 69:1376-1381 (1949)]. Iron content was obtained using the ICP system and leaf burns were visually detected.

**Table III**

| | **Leaf Color** | | | | **Chlorophyll level at day 4*** | | **Iron Content at day4 (mg/g)** | **Leaf Burns at Day 4** |
|---|---|---|---|---|---|---|---|---|
| **Treatment/Day** | 0 | 2 | 4 | 10 | Chl. A | Chl. B | | |
| (1) control (untreated) | 1 | 1 | 1.1±0.3 | 1±0 | 2.6 | 1.1 | 0.60 | - |
| (2) Fe₂(SO₄)₃ alone | 1 | 1 | 1.3±0.4 | 1.2±0.4 | 2.8 | 1.2 | 0.61 | - |
| (3) Fe₂(SO₄)₃ + Silwet L-77 | 1 | 1.2±0.4 | 1.5±0.5 | 1.6±0.5 | 5.1 | 2.1 | 0.64 | + |
| (4) Ferri-Vant** | 1 | 1.6±0.5 | 2.0±0.8 | 2.2±0.8 | 9.2 | 4.6 | 0.69 | - |

| | | | | | | | | |
|---|---|---|---|---|---|---|---|---|
| • mg/sq. cm leaf area. ** Ferri-Vant^{R}: Fe₂(SO)₄ (Deshanim and Chemical Compounds, Israel, 0.2% w/w) coated with: Vegeol SPO^{R}, Tween 20^{R}, Jojoba wax, Plastinol^{R}, Coatex 21^{R}, Induce^{R}, Derivatized guar gum, Tixoseal^{R} (0.1% w/w). | | | | | | | | |

### Example 4

### Effect of Spring Pre-Bloom Spraying with Olive-Nutri-Vant (Multi-layer Adjuvant Coating Nutrient Mix Consisting of MKP, Urea and Boric Acid) on the Yield of Olive 'Nabali' as Determined Six Months Later, at Harvest

This experiment was carried out in two consecutive years (1999 and 2000) at Givat Yo'av orchard in northern Israel. The effect of Olive-Nutri-Vant^{R} was compared to an untreated control and to the same nutrient content tank mixed with a common surfactant.

**Table IV**

| **Treatment** | **No. of Trees** | **Average yield'99** **(kg/tree)** | **Total yield'99** **(kg/10⁸sq. m.)** | **Average yield'00** **(kg/tree)** | **Total yield'00** **(kg/10⁸sq. m.)** | **Total yield'99&00** **(kg/10⁸ sq. m.)** | **Percent of control** |
|---|---|---|---|---|---|---|---|
| Control-untreated | 23 | 1.2 | 45.0 | 51.8 | 1865.0 | 1910.0 | 100.0 |
| Nutrients + Triton X-100 | 45 | 2.3 | 82.0 | 51.9 | 1871.0 | 1953.0 | 102.2 |
| Olive-Nutri-Vant | 44 | 15.8 | 571.0 | 49.5 | 1872.0 | 2353.0 | 123.2 |

| | | | | | | | |
|---|---|---|---|---|---|---|---|
| *Olive-Nutri-Vant: MKP/urea/boric acid (3:1:05% w/w) coated with Castor oil, Tween 20, Plastinol, Coatex 21, Induce, Optima, Derivatized guar gum (0.2% w/w). | | | | | | | |

### Example 5

### Effect of the three-envelope coating procedure of HarvestVant on the stability of the product in storage and its activity on loosening olive fruit retention force

Ethylene-releasing compounds are known to stimulate abscission zone in the stem of olive fruits [Goren, et al., J. Amer. Soc. Hort. Sci. 123:545-549 (1998)]. Phosphorus compounds and mainly Ethephon release ethylene when decomposed and improve mechanical harvesting of fruits. This process is significantly catalyzed in alkaline conditions. Harvestvant™ contains a mixture of phosphorus compounds releasing ethylene, coated with Formulation 5 (without iron oxide). However, the stability of the product after storage is significantly reduced, due to decomposition of the Ethephon by the other relatively alkaline phosphorus compounds (mainly DKP and in less extent by MKP). To overcome this stability obstacle of the product, a three-envelope coating procedure was developed (see Procedure C).

Using the Tseng et al, method for determination of Ethephon residue in agricultural products [Tseng et al, J. Food and Drug Analysis 8:213-217 (2000)], Ethephon was analysed by gas chromatography. As shown in Table V, after storage of the product for 45 days almost all (98%) of the Ethephon introduced to the original formulation was recovered in the three-envelope coating procedure. In the regular, one coating procedure, 65% of the Ethephon was recovered in comparison to 5% Ethephon recovery in the non-coated product that was based only on mixing the same ingredients.

The activity of the three products on loosening olive fruit retention force was tested in commercial olive plantation and the results clearly indicated the differences in the stability of the products. The non-coated product did not make any difference in term of FRF value in comparison to unsprayed trees. The HarvestVant™ product with one regular coating reduced the FRF value in comparison to the control but was considerably lower than the FRF value of the three-envelope coated product. In order to improve mechanical harvesting of olives it is required to loosen FRF value under 200 gr, at least in the tested variety. Additionally, to keep the product active for long term it is essential to prevent the decomposition of Ethephon, since in the HarvestVant™ product the level of Ethephon that is applied to the tree is 2.5 fold lower than the recommended amount when using this product alone.

**Table V**

| Treatment | Ethephon recovery (%) after 45 days of storage | Activity of the product FRF (gr) |
|---|---|---|
| (1) Control (non-treated) | | 350 |
| (2) Non coated mixture* | 5% | 350±45** |
| (3) HarvestVant one envelope procedure | 65% | 240±30 |
| (4) HarvestVant three envelope procedure | 98% | 120±40 |

| | | |
|---|---|---|
| * The mixture of ingredients of all of treatments consisted of Ethephon (Rhone-Poulenc, 2.4% w/w), phosphoric acid (2.4% w/w), MKP (66% w/w), DKP (20% w/w), and humic Acid (1.2% w/w) and the remainder was based on the coating formulation. ** FRF - fruit retention force, measured by a portable digital FRF apparatus. Note: FRF value of untreated olive trees was the same as trees sprayed with non-coated product (350 gr). | | |

The same materials used for Ethephon recovery analysis was sprayed (3% w/w) by a commercial sprayer on 20 'Barnea' olive trees for each treatment. The values of FRF tests are mean of 20 replicates for each tree.

## Claims

1. A particulate material composition for the treatment of plants, that is a structural combination of agro-materials and adjuvant formulations, wherein an agro-material particle constitutes the nucleus of each composition particle and adjuvant formulations constitute a coating of the composition particle, wherein the adjuvant formulations comprise a plurality of components, and wherein said components constitute superimposed coating layers in each particle of the composition, **charachterized in that** the adjuvant formulations comprise a combination of lipophilic and hydrophilic cuticle surface active agents, wetting agents, thickening agents and fatty self-emulsified components.

2. Composition according to claim 1, wherein at least one of said superimposed coating layers is a layer comprised of solid or semi-solid materials sorbed with an adjuvant formulation identical or different from the adjuvant formulation with which the agro-materials are coated.

3. Composition according to claim 2, wherein said solid or semi-solid materials are sorbed with the same adjuvant formulation with which the agro-materials are coated.

4. Composition according to claim 1, wherein the thickening agents are polysaccharides.

5. Composition for the treatment of plants comprising the particulate material composition according to any one of claims 1 to 4, wherein said agro-material nucleus is coated by several, superimposed layers consisting of a polysaccharide, a solid fat, a fatty alcohol and a mixture of vegetable oils, esterified and epoxified self-emulsified oils, wherein optionally at least one of said superimposed layers consists of a solid or semi-solid carrier sorbed with a mixture of a polysaccharide, a solid fat, a fatty alcohol and a mixture of vegetable oils, esterified and epoxified self-emulsified oils.

6. Composition according to any one of claims 1 to 5, wherein the agro-materials are chosen from the group consisting of fertilizers, trace elements, plant growth regulators, biostimulants, pesticides, herbicides and insecticides.

7. Composition according to claim 6, wherein the agro-material contains at least one of the following components: at least one fertilizer, at least one trace element and at least one plant growth regulator.

8. Composition according to claim 7, wherein the fertilizer contains at least one element selected from the group consisting of potassium, nitrogen, phosphorous and mixtures thereof.

9. Composition according to claim 7, wherein the trace element contains at least one element selected from the group consisting of iron, zinc, boron, magnesium, manganese, copper, calcium, molybdenum and mixtures thereof.

10. Composition according to claim 7, wherein the plant growth regulator contains at least one element selected from the group consisting of auxin, gibberelline, cytokinine, ethylene, abssicic acid, a growth retardant, jasmonic acid, polyamine, brassinolid, salicylic acid and mixtures thereof.

11. Composition according to claim 7, comprising a biostimulant selected from the group consisting of humic acid, amino acids, sea weed, algae and any mixture thereof.

12. Composition according to claim 7, comprising an insecticide selected from the group consisting of insect growth regulators, organo-phosphorous compounds, carbamides, thiocarbamides and mixtures thereof.

13. Composition according to claim 7, comprising an herbicide, selected from the group consisting of bromacil, diuron, glyphosate, and any mixtures thereof.

14. Composition according to any one of claims 4 to 7, wherein the lipophilic components are chosen from the group consisting of polydispersed ethoxylated fatty alcohols, dicarboxylic acids, phosphate hydrocarbons, vegetable oils, epoxified triglycerides, esterified self-emulsified oils.

15. Composition according to any one of claims 2 to 7, wherein the solid or semi-solid material is chosen from the group consisting of fumed silica and clay.

16. Process for preparing a composition according to claim 2 or 3, which comprises:
a) providing at least one agro-material in particulate form and a solid or semi-solid carrier;
b) preparing a homogeneous adjuvant mixture of adjuvant formulation components,
c) spraying said adjuvant mixture over said at least one agro-material,
d) sorbing said adjuvant mixture into said solid or semi-solid carrier,
e) applying the carrier sorbed with said adjuvant mixture obtained in step d) onto the particles obtained in step c),
f) optionally spraying the particles obtained in step e) with said adjuvant mixture,
g) cooling the particles obtained in step e) or step f), and
h) allowing the cooled agro-material obtained in step g) to dry.

17. A process according to claim 16, which comprises:
a) providing more than one agro-material in particulate form and a solid or semi-solid carrier,
b) preparing a homogeneous adjuvant mixture of adjuvant formulation components,
c) spraying said adjuvant mixture over each of said agro-materials,
d) sorbing said adjuvant mixture into said solid or semi-solid carrier,
e) applying the carrier sorbed with said adjuvant mixture obtained in step d) onto the particles obtained in step c),
f) spraying the particles obtained in step e) with said adjuvant mixture,
g) cooling the particles obtained in step f), and
h) allowing the cooled agro-material obtained in step g) to dry.

## Patentansprüche

1. Partikelmaterialzusammensetzung zur Behandlung von Pflanzen, welche eine strukturelle Kombination von Agromaterialien und Adjuvansformulierungen ist, wobei ein Agromaterialpartikel den Kern von jedem Zusammensetzungspartikel bildet und Adjuvansformulierungen eine Beschichtung des Zusammensetzungspartikels bilden, wobei die Adjuvansformulierungen mehrere Bestandteile umfassen und wobei die Bestandteile übereinanderliegende Beschichtungslagen in jedem Partikel der Zusammensetzung bilden, **dadurch gekennzeichnet, daß** die Adjuvansformulierungen eine Kombination von lipophilen und hydrophilen cuticulaoberflächenaktiven Mitteln, Befeuchtungsmitteln, Verdickungsmitteln und fettigen selbst-emulgierenden Bestandteilen umfassen.

2. Zusammensetzung nach Anspruch 1, wobei wenigstens eine der übereinanderliegenden Beschichtungslagen eine Schicht ist, die aus festen und halbfesten Materialien aufgebaut ist, die sorbiert sind mit einer Adjuvansformulierung, die identisch oder verschieden von der Adjuvansformulierung ist, mit welcher die Agromaterialien beschichtet sind.

3. Zusammensetzung nach Anspruch 2, wobei die festen oder halbfesten Materialien sorbiert sind mit derselben Adjuvansformulierung, mit welcher die Agromaterialien beschichtet sind.

4. Zusammensetzung nach Anspruch 1, wobei die Verdickungsmittel Polysaccharide sind.

5. Zusammensetzung zur Behandlung von Pflanzen, umfassend die Partikelmaterialzusammensetzung nach einem der Ansprüche 1 bis 4, wobei der Agromaterialkern beschichtet ist durch verschiedene übereinanderliegende Lagen, bestehend aus einem Polysaccharid, einem festen Fett, einem Fettalkohol und einem Gemisch von Pflanzenölen, esterifizierten und epoxidierten selbstemulgierten Ölen, wobei gegebenenfalls wenigstens eine der übereinanderliegenden Schichten aus einem festen oder halbfesten Träger besteht, der sorbiert ist mit einem Gemisch eines Polysaccharids, eines festen Fettes, eines Fettalkohols und einem Gemisch von Pflanzenölen, esterifizierten und epoxidierten selbstemulgierten Ölen.

6. Zusammensetzung nach einem der Ansprüche 1 bis 5, wobei die Agromaterialien gewählt sind aus der Gruppe, die besteht aus Düngern, Spurenelementen, Pflanzenwachstumsregulatoren, Biostimulanzien, Pestiziden, Herbiziden und Insektiziden.

7. Zusammensetzung nach Anspruch 6, wobei das Agromaterial wenigstens einen der folgenden Bestandteile enthält: wenigstens einen Dünger, wenigstens ein Spurenelement und wenigstens einen Pflanzenwachstumsregulator.

8. Zusammensetzung nach Anspruch 7, wobei der Dünger wenigstens ein Element enthält, das gewählt ist aus der Gruppe, die aus Kalium, Stickstoff, Phosphor und Gemischen davon besteht.

9. Zusammensetzung nach Anspruch 7, wobei das Spurenelement wenigstens ein Element enthält, das gewählt ist aus der Gruppe, die aus Eisen, Zink, Bor, Magnesium, Mangan, Kupfer, Kalzium, Molybdän und Gemischen davon besteht.

10. Zusammensetzung nach Anspruch 7, wobei der Pflanzenwachstumsregulator wenigstens ein Element enthält, das gewählt ist aus der Gruppe, die aus Auxin, Gibberilin, Cytokinin, Ethylen, Abscisinsäure, Wachstumsverzögerer, Jasmonsäure, Polyamin, Brassinolid, Salicylsäure und Gemischen davon besteht.

11. Zusammensetzung nach Anspruch 7, umfassend ein Biostimulans, gewählt aus der Gruppe, die aus Huminsäure, Aminosäuren, Seetang, Algen und einem Gemisch davon besteht.

12. Zusammensetzung nach Anspruch 7, bestehend aus einem Insektizid, das gewählt ist aus der Gruppe, die aus Insektenwachstumsregulatoren, Organ-Phosphorverbindungen, Carbamiden, Thiocarbamiden und Gemischen davon besteht.

13. Zusammensetzung nach Anspruch 7, umfassend ein Herbizid, gewählt aus der Gruppe, die aus Bromacil, Diuron, Glyphosat und einem Gemisch davon besteht.

14. Zusammensetzung nach einem der Ansprüche 4 bis 7, wobei die lipophilen Bestandteile gewählt sind aus der Gruppe, die aus polydispergierten ethoxylierten Fettalkoholen, Dicarboxylsäuren, Phosphat-Kohlenwasserstoffen, Pflanzenölen, epoxidierten Triglyceriden, esterifizierten selbstemulgierten Ölen besteht.

15. Zusammensetzung nach einem der Ansprüche 2 bis 7, wobei das feste oder halbfeste Material gewählt ist aus der Gruppe, die aus Rauchsilica und Ton besteht.

16. Verfahren zur Herstellung einer Zusammensetzung nach Anspruch 2 oder 3, welches umfaßt:
a) Bereitstellen wenigstens eines Agromaterials in Partikelform und eines festen oder halbfesten Trägers,
b) Herstellen eines homogenen Adjuvansgemisches von Adjuvansformulierungsbestandteilen,
c) Sprühen des Adjuvansgemisches über das wenigstens eine Agromaterial,
d) Sorbieren des Adjuvansgemisches in den festen oder halbfestenTräger,
e) Auftragen des mit dem Adjuvansgemisch sorbierten Trägers, der in Schritt d) erhalten ist, auf die Partikel, die in Schritt c) erhalten sind,
f) gegebenenfalls Besprühen der in Schritt e) erhaltenen Partikel mit dem Adjuvansgemisch,
g) Kühlen der in Schritt e) oder Schritt f) erhaltenen Partikel und
h) Trocknenlassen des in Schritt g) erhaltenen abgekühlten Agromaterials.

17. Verfahren nach Anspruch 16, welches umfaßt:
a) Bereitstellen von mehr als einem Agromaterial in Partikelform und eines festen oder halbfesten Trägers,
b) Herstellen eines homogenen Adjuvansgemisches von Adjuvansformulierungsbestandteilen,
c) Sprühen des Adjuvansgemisches über jedes der Agromaterialien,
d) Sorbieren des Adjuvansgemisches in den festen oder halbfesten Träger,
e) Auftragen des mit dem Adjuvansgemisch sorbierten Trägers, der in Schritt d) erhalten ist, auf die Partikel, die in Schritt c) erhalten sind,
f) Besprühen der in Schritt e) erhaltenen Partikel mit dem Adjuvansgemisch,
g) Kühlen der in Schritt f) erhaltenen Partikel und
h) Trocknenlassen des in Schritt g) erhaltenen abgekühlten Agromaterials.

## Revendications

1. Composition de matériaux particulaire pour le traitement des plantes, qui est une combinaison structurale d'agro-matériaux et de formulations d'adjuvants, où une particule d'agro-matériaux constitue le noyau de chaque particule de composition et les formulations d'adjuvants constituent un revêtement de la particule de composition, où les formulations d'adjuvants comprennent une pluralité de composants, et où lesdits composants constituent des couches de revêtement superposées dans chaque particule de la composition, **caractérisée en ce que** les formulations d'adjuvants comprennent une combinaison d'agents tensioactifs sur la cuticule lipophiles et hydrophiles, d'agents mouillants, d'agents épaississants et de composants auto-émulsifiés gras.

2. Composition selon la revendication 1 où au moins l'une desdites couches de revêtement superposées est une couche comprenant des matériaux solides ou semi-solides adsorbés ou absorbés avec une formulation d'adjuvants identique ou différente de la formulation d'adjuvants avec laquelle les agro-matériaux sont revêtus.

3. Composition selon la revendication 2 où lesdits matériaux solides ou semi-solides sont adsorbés ou absorbés avec la même formulation d'adjuvants avec laquelle les agro-matériaux sont revêtus.

4. Composition selon la revendication 1 où les agents épaississants sont des polysaccharides.

5. Composition pour le traitement des plantes comprenant la composition de matériaux particulaire selon l'une quelconque des revendications 1 à 4 où ledit noyau d'agro-matériaux est revêtu par plusieurs couches superposées consistant en un polysaccharide, une graisse solide, un alcool gras et un mélange d'huiles végétales, d'huiles auto-émulsifiées estérifiées et époxydées, où éventuellement au moins l'une desdites couches superposées consiste en un support solide ou semi-solide adsorbé ou absorbé avec un mélange d'un polysaccharide, d'une graisse solide, d'un alcool gras et d'un mélange d'huiles végétales, d'huiles auto-émulsifiées estérifiées et époxydées.

6. Composition selon l'une quelconque des revendications 1 à 5 où les agro-matériaux sont choisis dans le groupe consistant en les engrais, les oligoéléments, les régulateurs de croissance des plantes, les biostimulants, les pesticides, les herbicides et les insecticides.

7. Composition selon la revendication 6 où l'agro-matériau contient au moins l'un des composants suivants : au moins un engrais, au moins un oligoélément et au moins un régulateur de croissance des plantes.

8. Composition selon la revendication 7 où l'engrais contient au moins un élément choisi dans le groupe consistant en le potassium, l'azote, le phosphore et leurs mélanges.

9. Composition selon la revendication 7 où l'oligoélément contient au moins un élément choisi dans le groupe consistant en le fer, le zinc, le bore, le magnésium, le manganèse, le cuivre, le calcium, le molybdène et leurs mélanges.

10. Composition selon la revendication 7 où le régulateur de croissance des plantes contient au moins un élément choisi dans le groupe consistant en une auxine, une gibbérelline, une cytokinine, l'éthylène, l'acide abscissique, un retardateur de croissance, l'acide jasmonique, une polyamine, un brassinolide, l'acide salicylique et leurs mélanges.

11. Composition selon la revendication 7 comprenant un biostimulant choisi dans le groupe consistant en un acide humique, les aminoacides, les algues marines, les algues et tout mélange de ceux-ci.

12. Composition selon la revendication 7 comprenant un insecticide choisi dans le groupe consistant en les régulateurs de croissance des insectes, les composés organophosphorés, les carbamides, les thiocarbamides et leurs mélanges.

13. Composition selon la revendication 7 comprenant un herbicide choisi dans le groupe consistant en le bromacil, le diuron, le glyphosate et tout mélange de ceux-ci.

14. Composition selon l'une quelconque des revendications 4 à 7 où les composants lipophiles sont choisis dans le groupe consistant en les alcools gras éthoxylés polydispersés, les acides dicarboxyliques, les hydrocarbures phosphatés, les huiles végétales, les triglycérides époxydés, les huiles auto-émulsifiées estérifiées.

15. Composition selon l'une quelconque des revendications 2 à 7 où le matériau solide ou semi-solide est choisi dans le groupe consistant en la silice fumée et l'argile.

16. Procédé pour préparer une composition selon la revendication 2 ou 3 qui comprend :
a) la fourniture d'au moins un agro-matériau sous forme particulaire et d'un support solide ou semi-solide ;
b) la préparation d'un mélange d'adjuvants homogène de composants de formulation d'adjuvants,
c) la pulvérisation dudit mélange d'adjuvants sur ledit au moins un agro-matériau,
d) l'adsorption ou l'absorption dudit mélange d'adjuvants dans ledit support solide ou semi-solide,
e) l'application du support adsorbé ou absorbé avec ledit mélange d'adjuvants obtenu dans l'étape d) sur les particules obtenues dans l'étape c),
f) éventuellement la pulvérisation des particules obtenues dans l'étape e) avec ledit mélange d'adjuvants,
g) le refroidissement des particules obtenues dans l'étape e) ou l'étape f), et
h) le séchage de l'agro-matériau refroidi obtenu dans l'étape g).

17. Procédé selon la revendication 16 qui comprend :
a) la fourniture de plus d'un agro-matériau sous forme particulaire et d'un support solide ou semi-solide ;
b) la préparation d'un mélange d'adjuvants homogène de composants de formulation d'adjuvants,
c) la pulvérisation dudit mélange d'adjuvants sur chacun desdits agro-matériaux,
d) l'adsorption ou l'absorption dudit mélange d'adjuvants dans ledit support solide ou semi-solide,
e) l'application du support adsorbé ou absorbé avec ledit mélange d'adjuvants obtenu dans l'étape d) sur les particules obtenues dans l'étape c),
f) la pulvérisation des particules obtenues dans l'étape e) avec ledit mélange d'adjuvants,
g) le refroidissement des particules obtenues dans l'étape f), et
h) le séchage de l'agro-matériau refroidi obtenu dans l'étape g).
